# EUROPEAN PATENT APPLICATION

(11) **EP 3 561 452 A1**
(43) Date of publication of application: **30.10.2019**
(21) Application number: 16924293.0
(22) Date of filing: 22.12.2016
(51) Int. Cl.: G01C 21/26, G01C 22/00, G08G 1/005

(54) **INFORMATION PROCESSING DEVICE, INFORMATION PROCESSING METHOD, AND INFORMATION PROCESSING PROGRAM**

(71) Applicant: Fujitsu Limited, Kawasaki-shi, Kanagawa 211-8588 (JP)
(72) Inventor: TATEDA, Hayato, Kawasaki-shi, Kanagawa 211-8588 (JP); MURASE, Yuichi, Kawasaki-shi, Kanagawa 211-8588 (JP)
(74) Representative: Haseltine Lake Kempner LLP
(86) International application number: PCT/JP2016/088563
(87) International publication number: WO 2018/116476

(57) **Abstract**

An IoT device detects a change in a traveling direction of a walker wearing the IoT device. While a change amount in the traveling direction is less than a threshold value, the IoT device then detects the amount of travel for each step of the walker based on an amplitude component of the IoT device in the up and down direction. The IoT device then estimates a position of the walker using the amount of travel having been estimated. Thereafter, when the change amount of the traveling direction is equal to or more than the threshold value, the IoT device estimates the position of the walker using the amount of travel detected while the change amount having been estimated is less than the threshold value.

## Description

The present invention relates to an information processing apparatus, an information processing method, and an information processing program.

### BACKGROUND ART

Conventionally, Pedestrian Dead Reckoning (PDR) of a walker using a smartphone, an Internet of Things (IoT) device, or the like is known. For example, a service for watching a target person such as an elderly person by attaching an IoT device to the target person and measuring the PDR trajectory of the target person, and other services are spreading.

For outdoor positioning, a positioning method using Global Positioning System (GPS) and map information of car navigation is commonly used, but in indoor or the like, cases where map information is not available are not a few, and GPS radio waves are not received in many cases. For this reason, in recent years, for indoor users, a technique of calculating position information accurately using the PDR trajectory by using the size of the stride length estimated based on the amplitude of the vibration in the up and down direction caused by walking in addition to various radio wave positioning and acoustic positioning.

### CITATION LIST

### PATENT DOCUMENT

Patent Document 1: Japanese Laid-open Patent Publication No. 2012-208011
Patent Document 2: Japanese Laid-open Patent Publication No. 2000-097722

### SUMMARY OF INVENTION

### TECHNICAL PROBLEM

However, with the above-described technique, when a measurement target person changes direction, the measurement accuracy of the position is deteriorated. For example, when a walker changes his/her traveling direction, the walker unconsciously makes a stepping-in movement and influence of centrifugal force accompanying the direction change is added, increasing detected vibration in the up and down direction. Thus, the estimated value of the stride length becomes more than the actual value and the PDR trajectory is disturbed.

In one aspect, it is an object to provide an information processing apparatus, an information processing method, and an information processing program capable of reducing deterioration of positional accuracy when a traveling direction of a walker changes.

### SOLUTION TO PROBLEM

In a first aspect, an information processing apparatus includes a detection unit configured to detect a change in a traveling direction of a walker wearing the information processing apparatus. The information processing apparatus includes a first estimation unit configured to, while a change amount of the traveling direction is less than a threshold value, detect an amount of travel of the walker for each step based on an amplitude component of the information processing apparatus in an up and down direction, and estimate a position of the walker using the amount of travel having been estimated The information processing apparatus includes a second estimation unit configured to, when the change amount of the traveling direction is equal to or more than the threshold value, estimate the position of the walker using the amount of travel detected by the first estimation unit while the change amount is less than the threshold value.

### ADVANTAGEOUS EFFECTS OF INVENTION

According to one embodiment, it is possible to reduce degradation of positional accuracy when the traveling direction of a walker changes.

### BRIEF DESCRIPTION OF DRAWINGS

FIG. 1 is a diagram illustrating a hardware configuration example of an IoT device according to a first embodiment.
FIG. 2 is a functional block diagram illustrating a functional configuration of the IoT device according to the first embodiment.
FIG. 3 is a diagram for describing a vibration component in the up and down direction of acceleration data.
FIG. 4 is a diagram for describing an estimation example of a posture.
FIG. 5 is a diagram for describing an estimation image of a traveling direction.
FIG. 6 is a diagram for describing an estimation example of the traveling direction.
FIG. 7 is a diagram for describing a correction example of a stride length.
FIG. 8 is a flowchart illustrating a flow of overall processing.
FIG. 9 is a flowchart illustrating a flow of direction change detection processing.
FIG. 10 is a diagram for describing a direction change according to a second embodiment.
FIG. 11 is a flowchart illustrating a flow of direction change detection processing according to the second embodiment.
FIG. 12 is a flowchart illustrating a flow of direction change detection processing according to a third embodiment.

### DESCRIPTION OF EMBODIMENTS

Embodiments of an information processing apparatus, an information processing method, and an information processing program according to the present invention will be described in detail below with reference to the drawings. Note that the present invention is not limited to the embodiments. Further, each embodiment may be appropriately combined within a range without contradiction.

### [First Embodiment]

### [Description of IoT Device]

An IoT device 10 according to a first embodiment is an example of an information processing apparatus having a triaxial acceleration sensor, a gyro sensor, and a geomagnetic sensor mounted thereon, and is attached to a trunk of a user represented by a badge or the like. In addition, to the IoT device 10, an algorithm similar to that used in a general pedometer is applied, and the IoT device 10 counts the number of steps of the user wearing the IoT device 10. Further, the IoT device 10 periodically acquires the position of the user to generate a movement trajectory of the user. In addition, as a trajectory generation method, an algorithm similar to that used in a general PDR is adopted.

### [Hardware Configuration of IoT Device]

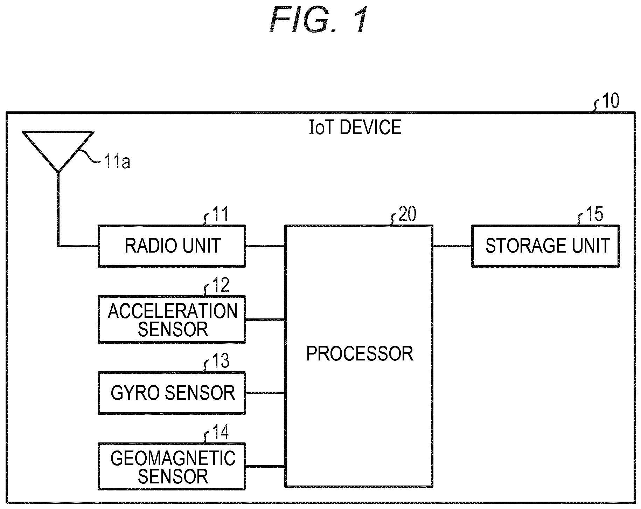

FIG. 1 is a diagram illustrating a hardware configuration example of the IoT device 10 according to the first embodiment. As illustrated in FIG. 1, the IoT device 10 includes a radio unit 11, an acceleration sensor 12, a gyro sensor 13, a geomagnetic sensor 14, a storage unit 15, and a processor 20. It is to be noted that the hardware configuration illustrated here is an example and may include other hardware such as a display, a hard disk, an atmospheric pressure sensor, or the like.

The radio unit 11 performs transmission and reception of data with other terminals and servers via an antenna 11a and is used for radio wave positioning by, for example, receiving beacon radio waves from surrounding Wireless-Fidelity (Wi-Fi) base stations. The acceleration sensor 12 is a sensor that measures the acceleration of the IoT device 10 and outputs the acceleration to the processor 20, and is a triaxial acceleration sensor that measures accelerations (an acceleration vector) in three directions of the XYZ axes. The gyro sensor 13 is a sensor that measures the angle and angular velocity of the IoT device 10 and outputs the angle and angular velocity to the processor 20. The geomagnetic sensor 14 is a sensor that measures the azimuth and outputs the azimuth to the processor 20.

The storage unit 15 is a storage device that stores programs and data, and is, for example, a memory, a hard disk, or the like. The processor 20 is a Central Processing Unit (CPU) or the like and reads a program that defines contents of various types of processing to be described below from the storage unit 15 and executes the program to perform a process that exhibits functions that are similar to various types of processing to be described below and performs various types of processing related to PDR.

### [Functional Configuration of IoT Device]

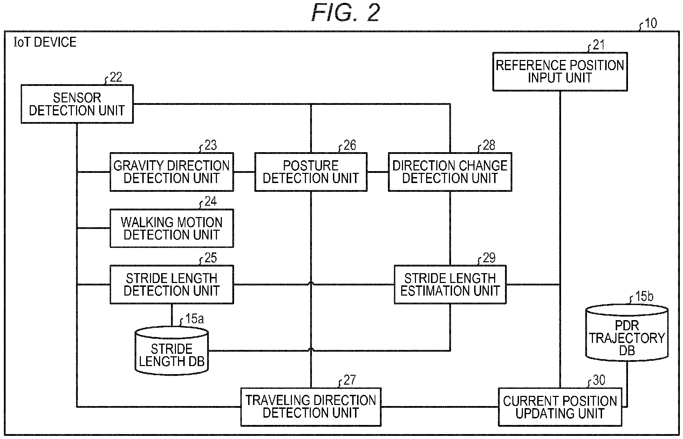

FIG. 2 is a functional block diagram illustrating a functional configuration of the IoT device 10 according to the first embodiment. As illustrated in FIG. 2, the IoT device 10 includes a stride length DB 15a and a PDR trajectory DB 15b. The IoT device 10 also includes a reference position input unit 21, a sensor detection unit 22, a gravity direction detection unit 23, a walking motion detection unit 24, a stride length detection unit 25, a posture detection unit 26, a traveling direction detection unit 27, a direction change detection unit 28, a stride length estimation unit 29, and a current position updating unit 30.

The stride length DB 15a and the PDR trajectory DB 15b are stored in a storage device such as the storage unit 15. The reference position input unit 21, the sensor detection unit 22, the gravity direction detection unit 23, the walking motion detection unit 24, the stride length detection unit 25, the posture detection unit 26, the traveling direction detection unit 27, the direction change detection unit 28, the stride length estimation unit 29, and the current position updating unit 30 are examples of electronic circuits included in the processor 20 or examples of processes performed by the processor 20.

The stride length DB 15a is a database that stores the stride lengths estimated by the stride length detection unit 25. For example, the stride length DB 15a stores time of estimation and a stride length in association with each other. The PDR trajectory DB 15b is a database that stores the PDR trajectory generated by the current position updating unit 30.

The reference position input unit 21 is a processor that measures a reference position using beacons conforming to the Global Positioning System (GPS), the Bluetooth (registered trademark) Low Energy (BLE), or the like. For example, the reference position input unit 21 detects data having a small prediction error radius based on the position information obtained by the GPS and the result of the radio wave positioning using the radio wave of beacons. The reference position input unit 21 then inputs the detected data to the current position updating unit 30 as a reference position. As a measuring method, various known methods may be adopted.

The sensor detection unit 22 is a processor that acquires sensor values acquired by various sensors and outputs the sensor values to each processor. For example, the sensor detection unit 22 acquires the acceleration data sensed by the acceleration sensor 12 and outputs the acceleration data to the gravity direction detection unit 23, the walking motion detection unit 24, the stride length detection unit 25, the traveling direction detection unit 27, and the like.

In addition, the sensor detection unit 22 outputs angular velocity data acquired by the gyro sensor 13 to the posture detection unit 26 and the like. Further, the sensor detection unit 22 outputs the geomagnetic data acquired by the geomagnetic sensor 14 to the posture detection unit 26 and the like.

The gravity direction detection unit 23 is a processor that extracts the gravity direction based on the acceleration data input from the sensor detection unit 22. For example, the gravity direction detection unit 23 calculates a steady component of the acceleration as a gravity direction (gravity vector) by passing the acceleration data through a low-pass filter or the like. The gravity direction detection unit 23 then outputs the detected gravity direction to the walking motion detection unit 24 and the like.

The walking motion detection unit 24 is a processor that extracts a vibration component in the up and down direction based on the gravity direction detected by the gravity direction detection unit 23 and the acceleration data input from the sensor detection unit 22, and detects walk parameters including the stride length, the number of steps, a temporal section for each step, and the like. For example, the walking motion detection unit 24 passes the input acceleration data through a bandpass filter to extract a frequency near a predetermined frequency, and calculates a vibration component. An example of the frequency to be extracted is from 0.5 Hz to 3 Hz or the like.

Thereafter, the walking motion detection unit 24 calculates the vibration component in the up and down direction based on the inner product value of the acceleration data in the gravity direction (gravity vector) and the vibration component. In addition, the walking motion detection unit 24 may acquire the section for one step and the number of steps by detecting the peak or the zero-cross point based on the vibration component in the up and down direction. The walking motion detection unit 24 then outputs the vibration component in the up and down direction and the number of steps to the stride length detection unit 25 and the like.

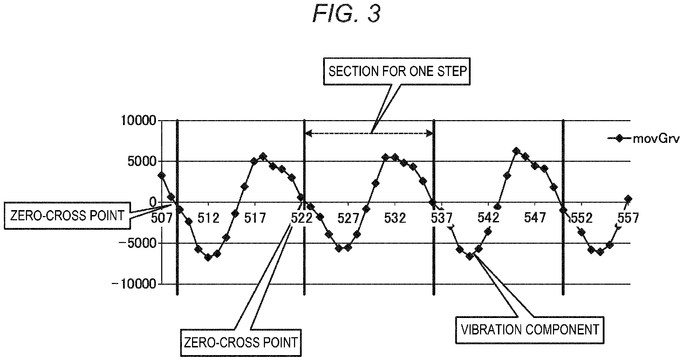

FIG. 3 is a diagram for describing the vibration component in the up and down direction of the acceleration data. In FIG. 3, the vertical axis is frequency and the horizontal axis is time. In the example illustrated in FIG. 3, the amplitude component having peaks at about 5000 and about -5000 is illustrated, and the walking motion detection unit 24 detects a point at which the frequency is about 0 as a zero-cross point. In addition, the walking motion detection unit 24 detects three zero-cross points as a section for one step.

The stride length detection unit 25 is a processor that detects the number of steps using the vibration component in the up and down direction and the section for one step input from the walking motion detection unit 24. For example, the stride length detection unit 25 determines the stride length by performing Fourier series expansion of the vibration component in the gravity direction for a section of every two steps. That is, the stride length detection unit 25 detects the stride length every two steps, and stores the time of detection and the detected stride length in the stride length DB 15a in association with each other.

Note that the method of detecting the stride length is not limited to the method described above, and various known methods may be adopted. For example, the stride length detection unit 25 may calculate the time taken for one section using the number of sections detected within a predetermined time, and estimate the stride length in one section.

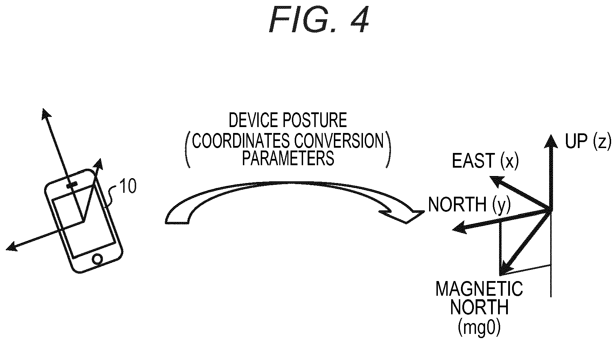

The posture detection unit 26 is a processor that detects the posture of the IoT device 10. Specifically, the posture detection unit 26 identifies the north direction and the east direction based on the magnetic north data sensed by the geomagnetic sensor 14 and the gravity direction detected by the gravity direction detection unit 23 using a known general method. FIG. 4 is a diagram for describing an estimation example of a posture. As illustrated in FIG. 4, the axis of the IoT device 10 and the world coordinates do not coincide with each other. Thus, the posture detection unit 26 detects conversion parameters from the axis of the IoT device 10 to the world coordinates having vertical, northward, and eastward directions as the posture of the IoT device 10.

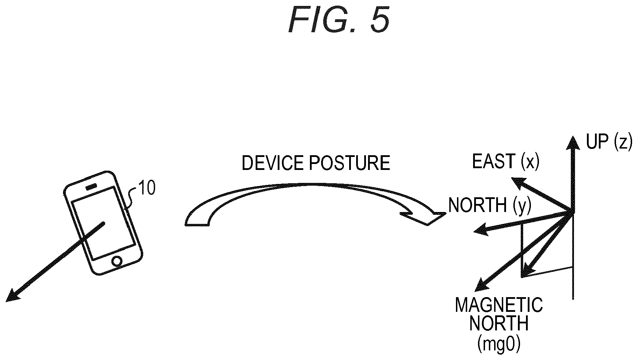

The traveling direction detection unit 27 is a processor that detects the traveling direction of the IoT device 10. Specifically, the traveling direction detection unit 27 estimates the traveling direction of the IoT device 10 on the world coordinates by using the posture of the IoT device 10 and the up and down, northward, and eastward directions. FIG. 5 is a diagram for describing an estimation image of the traveling direction. As illustrated in FIG. 5, the traveling direction detection unit 27 expresses the posture of the IoT device 10 on the world coordinates and detects the traveling direction of the IoT device 10 on the world coordinates using the inclination or the like of the posture. The traveling direction detection unit 27 then outputs the detected traveling direction to the current position updating unit 30.

Note that various methods known in the art may be adopted for detection of the traveling direction. For example, the traveling direction detection unit 27 may set a specific direction predetermined in the IoT device 10 as the traveling direction, may detect the traveling direction by performing the frequency analysis on the acceleration in the horizontal direction, or may detect the traveling direction by performing the main component analysis on the acceleration in the horizontal direction.

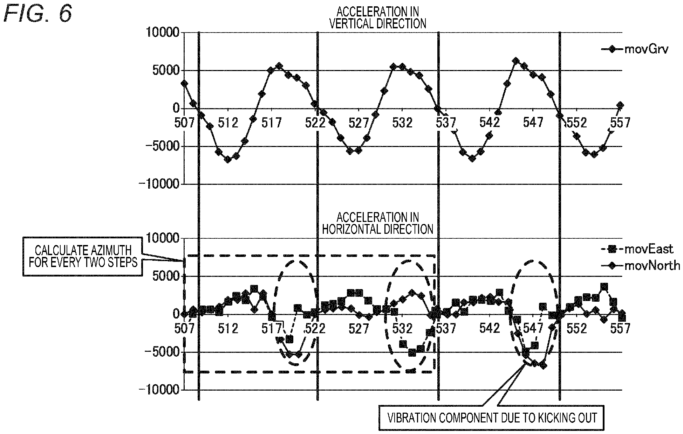

FIG. 6 is a diagram for describing an estimation example of the traveling direction. The upper diagram of FIG. 6 is the amplitude component of the acceleration in the vertical direction, that is, the up and down direction, and the lower diagram is the separated vibration components in the east and north directions, that is, the vibration component in the horizontal direction. As illustrated in FIG. 6, the vibration component of the acceleration data in the horizontal direction greatly changes due to stepping in and kicking out. Here, the traveling direction detection unit 27 calculates the traveling direction every two steps including stepping in on the right and left feet as one set. If the stride length and the traveling direction can be estimated, the amount of travel from the current position at the previous estimation may be known, so the current position may be updated using a known method.

The direction change detection unit 28 is a processor that detects a direction change of a walker. Specifically, the direction change detection unit 28 calculates the inner product of the amplitude component of the acceleration in the gravity direction detected by the gravity direction detection unit 23 and the angular velocity data detected by the gyro sensor 13 to extract the direction change component. The direction change detection unit 28 then determines that there is a direction change if the inner product value (angular velocity) after performing noise removal by passing the extracted direction change component through the low-pass filter is equal to or more than a certain value. Thereafter, the direction change detection unit 28 outputs information indicating whether there is a direction change or there is not a direction change to the stride length estimation unit 29. In this case, emphasis is placed on high responsiveness, and a large angular velocity is detected.

The stride length estimation unit 29 is a processor that performs estimation of the stride length to be used for updating the current position and calculating the PDR trajectory depending on whether or not there is a direction change. Specifically, the stride length estimation unit 29 determines to use the stride length detected by the stride length detection unit 25 if the direction change detection unit 28 notifies that there is no direction change, and the stride length estimation unit 29 determines not to use the stride length detected by the stride length detection unit 25 but to use the stride length when it is determined that there is no direction change in the past or immediately before the direction change if the direction change detection unit 28 notifies that there is a direction change.

For example, if there is no direction change, the stride length estimation unit 29 reads the latest stride length from the stride length DB 15a and outputs the latest stride length to the current position updating unit 30. On the other hand, if there is a direction change, the stride length estimation unit 29 does not read the latest stride length from the stride length DB 15a, but reads the stride length detected immediately before, that is, the stride length of two steps before the latest detection, and outputs the stride length to the current position updating unit 30. Note that the stride length output here is not limited to that of two steps before, but the stride length estimation unit 29 may, for example, read and output the stride length of one stride before or an average value for several steps may be calculated and output in the case where a stride length is detected for every step.

In addition, the stride length estimation unit 29 keeps notifying the current position updating unit 30 of the past stride while the direction change occurs. For example, while a direction change occurs continuously, the stride length estimation unit 29 does not notify the current position updating unit 30 of the stride length immediately before, but keeps notifying the current position updating unit 30 of the stride length notified of when the direction change was first detected. More specifically, in the case where traveling straight is determined at the time T1, a direction change is determined at time T2, a direction change is determined at time T3, a direction change is determined at time T4, and traveling straight is determined at time T5, the stride length estimation unit 29 notifies the current position updating unit 30 of the stride length at time T1 from time T2 to time T4 and of the stride length at the time at time T5.

The current position updating unit 30 is a processor that generates a PDR trajectory of a walker and stores the PDR trajectory in the PDR trajectory DB 15b. Specifically, the current position updating unit 30 updates the current position using the position input from the reference position input unit 21 as a reference position (start), the stride length of which the stride length estimation unit 29 notified, and the traveling direction of which the traveling direction detection unit 27 notified to calculate the trajectory connecting the current position from the reference position as the PDR trajectory.

In other words, the current position updating unit 30 calculates the PDR trajectory basically using the stride length detected by the stride length detection unit 25, but calculates the PDR trajectory not using the latest detected stride length but using the past stride lengths that have been stored in the past only when the direction change occurs.

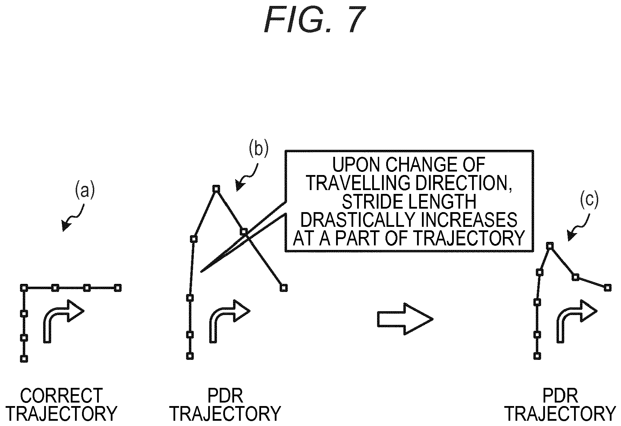

FIG. 7 is a diagram for describing a correction example of the stride length. The trajectory illustrated in (a) of FIG. 7 is an actual trajectory of a walker who makes a direction change at the fourth step, and the IoT device 10 generates a PDR trajectory close to this trajectory. Here, at the occurrence of the direction change, the accuracy of estimation of the acceleration in the gravity direction is deteriorated due to the influence of the centrifugal force generated by the direction change, and the accuracy in the traveling direction is deteriorated by combination of the centrifugal force and the lateral vibration due to walking. In addition, the direction change makes stepping in larger. Thus, the moving distance is estimated to be larger, and the positional accuracy is further deteriorated.

In other words, as illustrated in (b) of FIG. 7, if the stride length in the case where a direction change occurs is used as it is, the stride length drastically increases at a part of the trajectory at the time of the traveling direction change. Thus, a PDR trajectory that is significantly different from the actual trajectory illustrated in (a) of FIG. 7 is generated. Therefore, when a direction change occurs, the IoT device 10 according to the first embodiment generates a PDR trajectory ((c) of FIG. 7) using a stride length that has been detected when a direction change does not occur instead of the stride length at that time of the direction change, so that the error from the actual trajectory may be reduced. As a method of calculating the PDR trajectory, various known methods may be adopted.

### [Flow of Overall Processing]

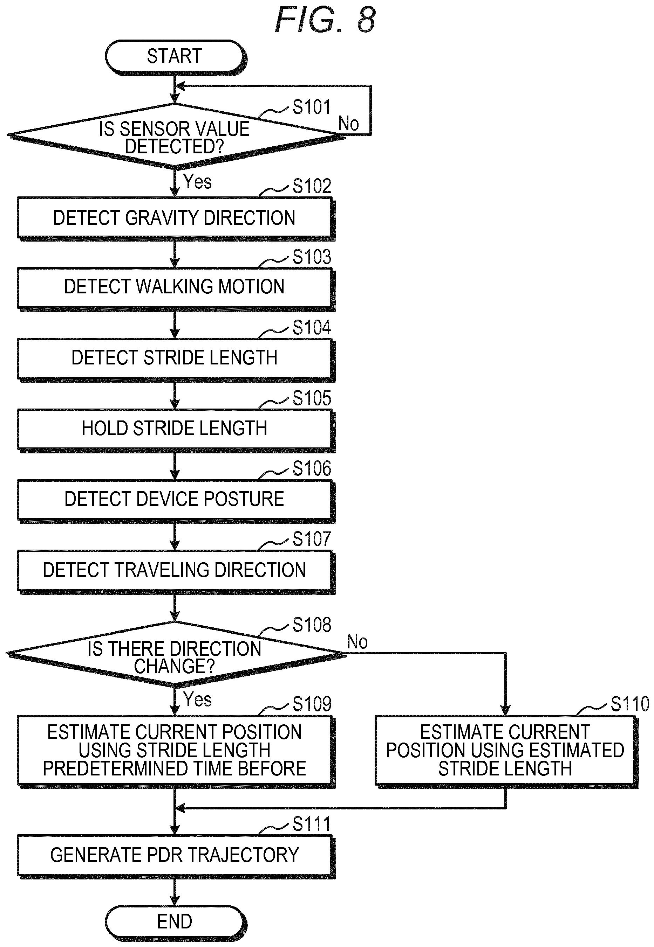

FIG. 8 is a flowchart illustrating the flow of the overall processing. As illustrated in FIG. 8, when the sensor detection unit 22 of the IoT device 10 detects a sensor value (Yes in S101), the gravity direction detection unit 23 extracts the gravity direction from the acceleration data input from the sensor detection unit 22 (S102).

Next, the walking motion detection unit 24 detects the vibration component in the up and down direction and the stride length based on the gravity direction detected by the gravity direction detection unit 23 and the acceleration data input from the sensor detection unit 22 (S103).

Then, the stride length detection unit 25 detects the number of steps using the vibration component in the up and down direction and the section for one step input from the walking motion detection unit 24 (S104), and holds the number of steps in the stride length DB 15a in association with the time of detection (S105). Next, the posture detection unit 26 detects the posture of the IoT device 10 based on the magnetic north data sensed by the geomagnetic sensor 14 and the gravity direction detected by the gravity direction detection unit 23 (S106).

The traveling direction detection unit 27 then detects the traveling direction of the IoT device 10 on the world coordinates by using the posture and the up and down, northward, and eastward directions of the IoT device 10 (S107).

Thereafter, if a direction change is detected by the direction change detection unit 28 (Yes in S108), the stride length estimation unit 29 determines to use the stride length detected a predetermined time before instead of the current stride length detected by the stride length detection unit 25, and the current position updating unit 30 then updates the current position by using the determined stride length (S109).

On the other hand, if a direction change is not detected by the direction change detection unit 28 (No in S108), the stride length estimation unit 29 determines to use the current stride length detected by the stride length detection unit 25, and the current position updating unit 30 then updates the current position by using the determined stride length (S110).

Thereafter, the current position updating unit 30 generates a PDR trajectory based on the current position updated in S109 or S110, the positional relationships before that time, and the like, and stores the PDR trajectory in the PDR trajectory DB 15b (S111).

### [Direction Change Detection Processing]

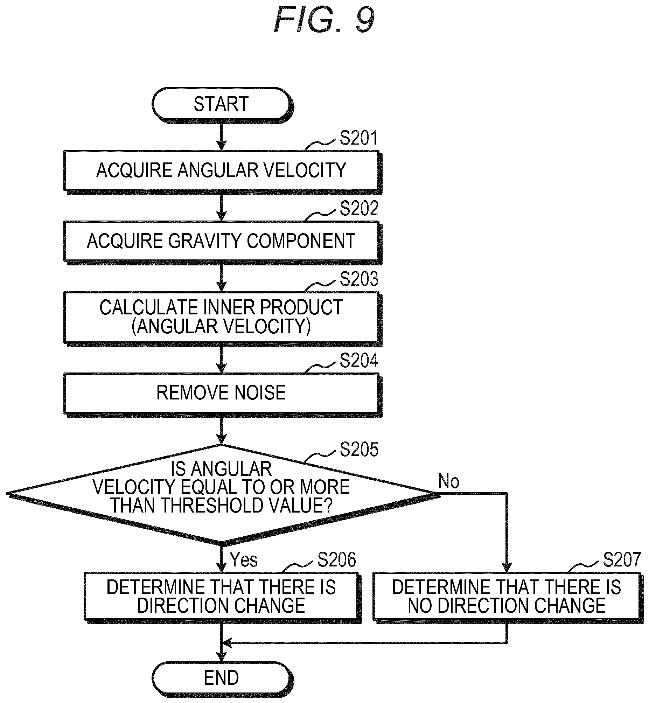

FIG. 9 is a flowchart illustrating the flow of the direction change detection processing. As illustrated in FIG. 9, the direction change detection unit 28 acquires angular velocity data from the sensor detection unit 22 (S201), and acquires the gravity component detected by the gravity direction detection unit 23 (S202).

Next, the direction change detection unit 28 calculates the inner product of the gravity component and the angular velocity to extract the direction change component (S203). Thereafter, after performing noise removal on the extracted direction change component (S204), if the angular velocity, which is the direction change component after the noise removal, is equal to or more than a threshold value (Yes in S205), the direction change detection unit 28 determines that there is a direction change (S206), and if the angular velocity is less than the threshold value (No in S205), the direction change detection unit 28 determines that there is no direction change (S207).

### [Advantageous Effect]

As described above, the IoT device 10 records the amount of travel for each step when the walker is traveling straight, and compares the amount of travel when the traveling direction of the walker changes with the recorded amount of travel. If there is a difference equal to or more than a certain threshold value, the IoT device 10 estimates the position of the walker using the recorded amount of travel. Therefore, the IoT device 10 may suppress the deterioration of the positional accuracy when the traveling direction of a walker changes, and may also suppress the deterioration of the accuracy of the PDR trajectory. In addition, when the state change event of a user is detected using the change in the pace as a trigger, erroneous detection at the time of a direction change may be suppressed.

### [Second Embodiment]

In the first embodiment, there has been described an example in which a direction change is detected by detecting a large angular velocity by placing emphasis on high responsiveness, but the present invention is not limited thereto. For example, a direction change may be reliably detected from an actually detected PDR trajectory. Therefore, in the second embodiment, an example of correcting the PDR trajectory when a direction change is detected from the actually detected PDR trajectory will be described.

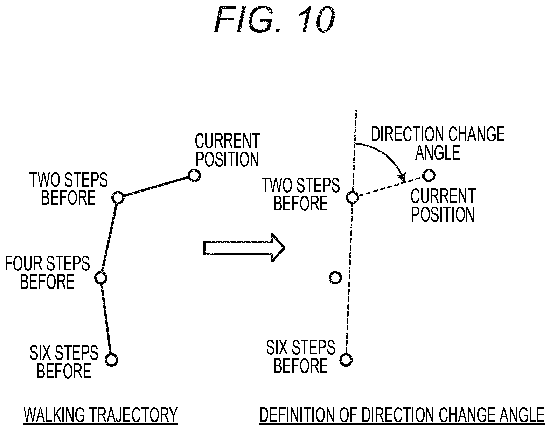

FIG. 10 is a diagram for describing the direction change according to the second embodiment. As illustrated in FIG. 10, an IoT device 10 detects a stride length every two steps to generate a PDR trajectory. Here, as illustrated in the left diagram of FIG. 10, the IoT device 10 generates a PDR trajectory, and then detects a change in the traveling direction from pieces of the trajectory information two steps before and six steps before the current position.

For example, the IoT device 10 calculates a vector from six steps before the current position to two steps before the current position from the PDR trajectory up to the current position. The IoT device 10 then detects that a direction change has occurred when the angle between the current position and the vector indicating the traveling direction from six steps before the current position to two steps before the current position is equal to or more than a threshold value.

When a walker walks sideways, the change in the angular velocity is small and the accuracy may be insufficient by using only the method of the first embodiment, but by using the method of the second embodiment, the direction change by walking in sideways may be detected, so that the accuracy of the PDR trajectory may be improved.

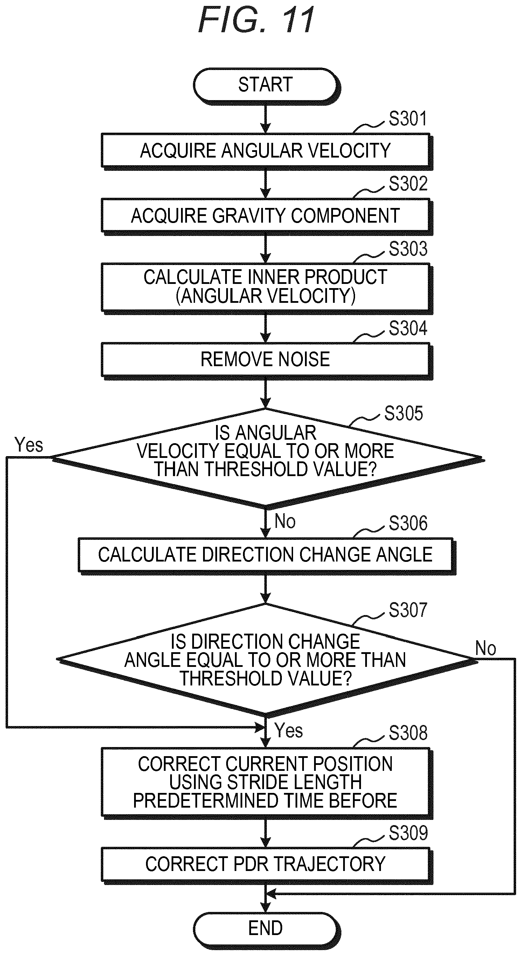

FIG. 11 is a flowchart illustrating the flow of the direction change detection processing according to the second embodiment. As illustrated in FIG. 11, the processing from S301 to S305 is the same as the processing from S201 to S205. Thus, the detailed description will not be provided.

If the angular velocity is less than a threshold value (No in S305), a direction change detection unit 28 calculates a vector from six steps before the current position to two steps before the current position based on the PDR trajectory up to the current position, and calculates the direction change angle based on the angle between the current position and the vector of the traveling direction from six steps before the current position to two steps before the current position (S306).

Then, if the direction change angle is equal to or more than a threshold value (Yes in S307), a current position updating unit 30 corrects the current position using the stride length calculated the predetermined time before (S308), and corrects the PDR trajectory using the corrected current position (S309). On the other hand, if the direction change angle is less than the threshold value (No in S307), the current position and the PDR trajectory are not corrected, and the processing ends without any other processing.

If it is determined in S305 that the angular velocity is equal to or more than a threshold value (Yes in S305), the processing in S308 and subsequent steps is performed. If it is determined that the angular velocity is equal to or more than the threshold value, the processing may end without any correction. That is, the update result according to the first embodiment may be maintained.

As described above, a direction change may be detected based on an actually detected PDR trajectory as well as the angular velocity that is highly responsive described in the first embodiment, and the PDR trajectory may be corrected, thereby improving the accuracy of the PDR trajectory. It is to be noted that the methods of the first embodiment and the second embodiment may be performed separately or in combination.

### [Third Embodiment]

In the first embodiment, the example in which a PDR trajectory is generated by using the stride length at the time of straight traveling when a direction change is detected has been described. However, actually, a direction change may be detected when a change in the stride length is detected to be equal to or more than a certain degree. Therefore, in the third embodiment, unlike the first embodiment, an example in which a direction change is detected only when the stride length changes will be described.

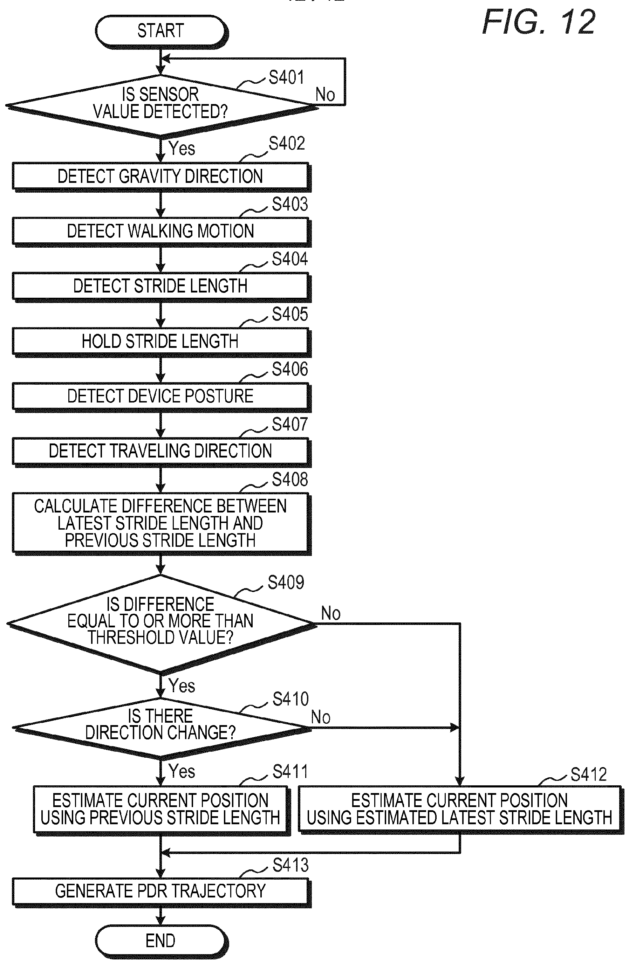

FIG. 12 is a flowchart illustrating the flow of direction change detection processing according to the third embodiment. As illustrated in FIG. 12, the processing from S401 to S408 is the same as the processing from S101 to S108 described in FIG. 8. Thus, the detailed description will not be provided.

When a traveling direction is detected, a stride length estimation unit 29 calculates the difference between the latest stride length, that is, the stride length measured upon detection of a direction change and the previous stride length, that is, the stride length measured at the time of straight traveling (S408) and determines whether or not the difference is equal to or more than a threshold value (S409).

If it is detected here that the difference is equal to or more than a threshold value (Yes in S409), and there is a direction change (Yes in S410), a current position updating unit 30 updates the current position using the previous stride length, that is, the stride length measured at the time of straight traveling (S411).

On the other hand, if the difference is less than the threshold value (No in S409), or if there is no direction change (No in S410), the current position updating unit 30 updates the current position using the current stride length detected by a stride length detection unit 25 (latest stride length) (S412).

Thereafter, the current position updating unit 30 generates a PDR trajectory based on the current position updated in S411 or S412, the positional relationships before that time, and the like, and stores the PDR trajectory in the PDR trajectory DB 15b (S413).

As described above, an IoT device 10 may generate the PDR trajectory using the actually detected stride length if the user's stepping in is small, if the direction change angle is small, or the like, so that generation of a PDR trajectory closer to the actual walking trajectory may be realized. Note that the method of the third embodiment may also be combined with the first embodiment of the second embodiment.

### [Fourth Example]

Although the embodiments of the present invention have been described above, the present invention may be implemented in various different forms in addition to the above-described embodiments. Therefore, a different embodiment will be described below.

### [Detection Example of Direction Change, Behavior Detection]

For example, an IoT device 10 may compare the amount of travel for each step as needed and determine whether or not a direction change has occurred when the amount of travel becomes equal to or more than a threshold value. More specifically, each time the stride length is detected, the IoT device 10 calculates the difference between the detected stride length from the previous stride length. Then, if a stride length that is different from the previous stride length by a predetermined value or more is detected, the IoT device 10 may determine whether or not a direction change has occurred by using the method of the first embodiment or the second embodiment.

Further, if a stride length that is different from the previous stride length by a predetermined value or more is detected, and the direction change is not detected, the IoT device 10 determines that the stride is for movement between floors, step up and down a stepladder, or the like. Then, the IoT device 10 may determine that an abnormality has been detected with respect to the behavior of the user, and notify an administrator or the like of an alarm. Note that the differences between stride lengths detected here include detection of the latest stride length that is smaller than the previous stride length by a predicted value or more in addition to detection of the latest stride length that is larger than the previous stride length by a predicted value or more. In addition, it is possible to update the current position using a past stride length if a direction change is detected and the difference between the stride length from the previous stride length is equal to or more than a threshold value, and to update the current position using the estimated stride length as is if the difference between the stride length from the previous stride length is less than the threshold value even if a direction change is detected.

In the above-described embodiments, the current position is updated by the IoT device 10 to generate the PDR trajectory. However, the present invention is not limited to the embodiments. A server may receive various types of information from the IoT device 10 to perform the processing of each of the above-described embodiment. Alternatively, a configuration in which the IoT device 10 updates the current position and the server generates the PDR trajectory is possible.

### [System]

In addition, among all types of the processing described in the embodiments, all or a part of the types of processing described as being automatically performed may be manually performed. Alternatively, all or a part of the types of processing described as being manually performed may be automatically performed. In addition, pieces of information including the processing procedure, control procedure, specific name, various types of data and parameters described above in the document or illustrated in the drawings may be changed in any ways unless otherwise specified. In the flow of each types of processing described in the above-described embodiments, the order of steps of processing may be interchanged as long as inconsistency is not caused.

In addition, each component of each device illustrated in the drawings is functionally conceptual, and thus the devices do not have to be physically configured as illustrated in the drawings. In other words, a specific form of distribution and integration of each of the devices are not limited to that illustrated in the drawings. That is, all or a part thereof may be configured by being functionally or physically distributed/integrated in any units depending on various loads, usage situations, and the like. Further, all or any part of each processing function performed by each device may be realized by a CPU and a program analyzed and executed by the CPU, or may be realized as hardware using wired logic.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

### REFERENCE SIGNS LIST

- 10: IoT device
- 15a: step stride length DB
- 15b: PDR trajectory DB
- 21: reference position input unit
- 22: sensor detection unit
- 23: gravity direction detection unit
- 24: walking motion detection unit
- 25: stride length detection unit
- 26: posture detection unit
- 27: traveling direction detection unit
- 28: direction change detection unit
- 29: stride length estimation unit
- 30: current position updating unit

## Claims

1. An information processing apparatus comprising:
a detection unit configured to detect a change in a traveling direction of a walker wearing the information processing apparatus;
a first estimation unit configured to, while a change amount of the traveling direction is less than a threshold value, detect an amount of travel of the walker for each step based on an amplitude component of the information processing apparatus in an up and down direction, and estimate a position of the walker using the amount of travel having been estimated; and
a second estimation unit configured to, when the change amount of the traveling direction is equal to or more than the threshold value, estimate the position of the walker using the amount of travel detected by the first estimation unit while the change amount is less than the threshold value.

2. The information processing apparatus according to claim 1 further comprising
a first calculation unit configured to calculate an inner product value of an angular velocity of the information processing apparatus and a gravity component of the information processing apparatus,
wherein the detection unit detects that the change amount of the traveling direction is equal to or more than the threshold value if the inner product value is equal to or more than a threshold value.

3. The information processing apparatus according to claim 2 further comprising
a second calculation unit configured to calculate a direction change angle between a current position of the walker and a position immediately before the current position based on the current position estimated by the second estimation unit and a trajectory of the walker up to the current position if the inner product value of the angular velocity of the information processing apparatus and the gravity component of the information processing apparatus is less than the threshold value,
wherein the second estimation unit estimates the position of the walker again using the amount of travel detected by the first estimation unit while the change amount is less than the threshold value if the direction change angle is equal to or more than the threshold value and updates the current position.

4. The information processing apparatus according to claim 1, wherein the second estimation unit detects the amount of travel of the walker based on the amplitude component of the information processing apparatus in the up and down direction, estimates the position of the walker using the amount of travel detected by the first estimation unit if a difference between the amount of travel detected by the second estimation unit and the amount of travel detected by the first estimation unit is equal to or more than a threshold value, and estimates the position of the walker using the amount of travel detected based on the amplitude component in the up and down direction if the difference is less than the threshold value.

5. The information processing apparatus according to claim 1, wherein, when the amount of travel estimated based on the amplitude component of the information processing apparatus in the up and down direction changes by a value equal to or more than the threshold value, the detection unit determines whether or not the traveling direction of the walker at the estimation of the amount of travel that is equal to or more than the threshold value has changed from a traveling direction of the walker immediately before the estimation of the amount of travel that is equal to or more than the threshold value by the threshold value or more.

6. An information processing method performed by an information processing apparatus, the information processing method comprising:
detecting a change in a traveling direction of a walker wearing the information processing apparatus;
detecting, while a change amount of the traveling direction is less than a threshold value, an amount of travel of the walker for each step based on an amplitude component of the information processing apparatus in an up and down direction, and estimating a position of the walker using the amount of travel having been estimated; and
estimating, when the change amount of the traveling direction is equal to or more than the threshold value, the position of the walker using the amount of travel detected while the change amount is less than the threshold value.

7. An information processing program that causes an information processing apparatus to:
detect a change in a traveling direction of a walker wearing the information processing apparatus;
detect, while a change amount of the traveling direction is less than a threshold value, an amount of travel of the walker for each step based on an amplitude component of the information processing apparatus in an up and down direction, and estimate a position of the walker using the amount of travel having been estimated; and
estimate, when the change amount of the traveling direction is equal to or more than the threshold value, the position of the walker using the amount of travel detected while the change amount is less than the threshold value.
